Europäisches Patentamt

European Patent Office

Office européen des brevets

(19)

(11) Numéro de publication : **0 098 185**
**B1**

(12) # FASCICULE DE BREVET EUROPÉEN

(45) Date de publication du fascicule du brevet :
18.09.85

(51) Int. Cl.⁴ : **G 03 H   1/00, G 02 F   1/03**

(21) Numéro de dépôt : **83401156.1**

(22) Date de dépôt : **07.06.83**

(54) **Dispositif d'éclairement d'un milieu électro-optique pour enregistrer des hologrammes en temps réel.**

(30) Priorité : **18.06.82 FR 8210703**

(43) Date de publication de la demande :
**11.01.84 Bulletin 84/02**

(45) Mention de la délivrance du brevet :
**18.09.85 Bulletin 85/38**

(84) Etats contractants désignés :
**DE GB IT NL SE**

(56) Documents cités :
**FR-A- 2 362 466**
**US-A- 3 767 284**
**OPTICAL ENGINEERING; vol. 17, no. 5, septembre-octobre 1978, pages 470-479, S.P.I.E., Bellingham, USA A.M. GLASS: "The photorefractive effect"**
**JOURNAL OF APPLIED PHYSICS, vol. 48, no. 9, septembre 1977, pages 3683-3690, American Institute of Physics, New York, USA M. PELITER et al.: "Volume hologram recording and charge transfer process in Bi12Si020 and Bi12Ge020"**

(73) Titulaire : **THOMSON-CSF**
**173, Boulevard Haussmann**
**F-75379 Paris Cedex 08 (FR)**

(72) Inventeur : **Graindorge, Philippe**
**THOMSON-CSF SCPI 173, bld Haussmann**
**F-75379 Paris Cedex 08 (FR)**
Inventeur : **Arditty, Hervé**
**THOMSON-CSF SCPI 173, Bld Haussmann**
**F-75379 Paris Cedex 08 (FR)**

Jouve, 18, rue St-Denis, 75001 Paris, France

## Description

La présente invention se rapporte aux cellules d'enregistrement holographique qui permettent d'enregistrer de manière réversible des hologrammes dans un milieu sensible électro-optique.

Il est connu d'enregistrer un hologramme dans un matériau tel que le niobate de lithium (LiNbO₃). Le principal inconvénient de ce matériau et des matériaux similaires utilisés jusqu'à présent est leur faible sensibilité comparée par exemple à celle des émulsions photographiques utilisées pour le même but.

On sait par ailleurs enregistrer des images dans des matériaux électro-optiques et photoconducteurs tels que l'oxyde de Bismuth-Silicium $Bi_{12}$-$SiO_{20}$ et l'oxyde de Bismuth-Germanium $B_{12}$-$GeO_{20}$ en appliquant à une plaque d'un tel matériau un champ électrique longitudinal perpendiculaire à cette plaque et obtenu généralement à l'aide de deux électrodes transparentes appliquées sur les faces de cette plaque. L'image est projetée sur la plaque et s'y enregistre sous la forme de variations locales de l'indice de réfraction. On peut ensuite examiner cette image sous une lumière ne produisant pas l'effet photoconducteur et en utilisant deux polariseurs croisés pour mettre en évidence les variations d'indice. Un tel dispositif présente malheureusement une faible résolution en raison de la migration des charges photo-électriques dans l'épaisseur de la plaque.

Mais si on utilise une cellule d'enregistrement holographique comprenant une plaque de l'un de ces deux matériaux soumise à un champ électrique transverse, parallèle à un axe cristallin privilégié de cette plaque, on peut alors enregistrer des hologrammes en volume avec une grande résolution et une grande sensibilité, comparables toutes deux aux caractéristiques des émulsions photographiques.

Cependant, le cristal n'étant éclairé que partiellement, il se crée des zones illuminées et des zones sombres, et donc une conductivité locale variable. Ainsi il se produit une division de la tension appliquée au cristal, conduisant ainsi à un champ très faible au sein de la zone éclairée. Donc si le faisceau de référence n'éclaire pas uniformément le cristal, l'application du champ électrique ne modifie que très peu l'efficacité de l'hologramme. De plus, l'éclairement du cristal, en fonction de la position suivant un axe du cristal est un signal gaussien. La conductivité suit donc la même variation ainsi que le champ électrique. La variation d'indice dans le cristal peut donc être assimilée à une lentille ; cette lentille produit alors une distorsion sur le faisceau conjugué, distorsion qui est bien visible lorsqu'on compare le faisceau conjugué au faisceau incident.

Pour pallier ces inconvénients, selon l'invention on éclaire le cristal par une lumière incohérente, en n'illuminant qu'une partie du cristal par le faisceau laser, on a alors à la fois les avantages d'un faisceau concentré et d'un faisceau large : une densité de puissance élevée et une bonne géométrie des faisceaux d'une part, et une application efficace du champ électrique sans créer un effet de lentille.

L'invention a pour objet un dispositif d'éclairement d'un milieu électro-optique pour enregistrer des hologrammes en temps réel comportant une source de lumière cohérente, formant à partir de la lumière cohérente issue de cette source une onde objet destinée à éclairer un objet et une onde de référence, et un milieu interactif, ce milieu recevant l'onde objet émergeant de l'objet et l'onde référence, ces deux ondes interférant dans ce milieu d'interaction dans lequel la modulation spatiale d'intensité lumineuse résultant des franges d'interférence induit une modulation spatiale de l'indice de réfraction, le réseau de strates ainsi photoinduites diffractant une fraction de l'onde référence sous la forme d'un front d'onde isomorphe de celui qui émane de l'objet, ce milieu étant soumis à un champ électrique transversal perpendiculaire à la direction des franges, caractérisé en ce qu'il comprend en outre une seconde source lumineuse qui produit un faisceau lumineux non cohérent avec la lumière issue de la source de lumière cohérente qui, pour atténuer la distorsion d'indice induite dans le milieu d'interaction (1) du fait que l'éclairage de ce milieu d'interaction (1) par l'onde de référence n'est pas uniforme, éclaire uniformément le milieu d'interaction.

L'invention sera mieux comprise à l'aide de la description qui suit illustrée par les figures annexées dont le contenu est le suivant :

— les figures 1 et 2 illustrent deux dispositifs de l'art connu ;

— la figure 3 illustre un aspect particulier de tels dispositifs de l'art connu ;

— la figure 4 illustre le dispositif de l'invention ;

— la figure 5 illustre un aspect particulier du dispositif de l'invention.

Les milieux électro-optiques tels que les cristaux d'oxyde de bismuth-silicium ($Bi_{12}SiO_{20}$) de niobate de lithium (LiNbO₃), de niobate de potas-sium (KNbO₃) ont des propriétés photo-électriques et électro-optiques qui les rendent propices à l'utilisation pour l'holographie en temps réel. On peut y former des hologrammes de phase qui, lorsqu'ils sont relus, génèrent un faisceau image qui possède des propriétés de conjugaison de phase par rapport au faisceau ayant servi à construire l'hologramme.

Si on considère par exemple les cristaux d'oxyde de bismuth-silicium ou « BSO », ces cristaux électro-optiques et photoconducteurs permettent l'enregistrement fonctionnant par variation d'indice photoinduite. Ces matériaux servent de support pour l'inscription d'un hologramme de phase inscriptible et effaçable en temps réel.

A titre d'exemple non limitatif, dans la suite de la description on considérera ce milieu « BSO » comme milieu interactif.

Les monocristaux électro-optiques et photoconducteurs d'oxyde de bismuth-silicium, constituent des supports à haute sensibilité pour l'enregistrement en volume de structures de phase diffractantes. La configuration électro-optique transverse utilisée permet de restituer des images dont la résolution spatiale est limitée par diffraction. Ces monocristaux, disponibles en grande dimension avec une bonne qualité optique sont continûment recyclables.

Les cristaux électro-optiques et photoconducteurs d'oxyde de bismuth-silicium $Bi_{12}SiO_{20}$ (B.S.O.) permettent l'enregistrement en volume de structures de phase diffractantes sans limitation spatiale de résolution lorsqu'un champ électrique extérieur est appliqué dans la configuration électro-optique transverse. L'inscription d'un réseau holographique élémentaire est obtenue par interférence de deux ondes planes $\Sigma_1$ et $\Sigma_2$ issues d'un laser. La répartition spatiale d'intensité lumineuse, générée dans le volume du cristal, s'écrit :

$$I(x) = I_o [1 + m \cos Kx]$$

avec

$m = (2\sqrt{I_1 \cdot I_2})/(I_1 + I_2)$ : taux de modulation des franges

$K = (2\pi)/\Lambda$ ; $\Lambda$ : pas de strates

Le pas de strates est lié à l'angle $2\theta_o$ entre les deux faisceaux par la relation suivante :

$$\Lambda = \lambda_o/(2 \sin \theta_o)$$

$\lambda_o$ : longueur d'onde d'inscription.

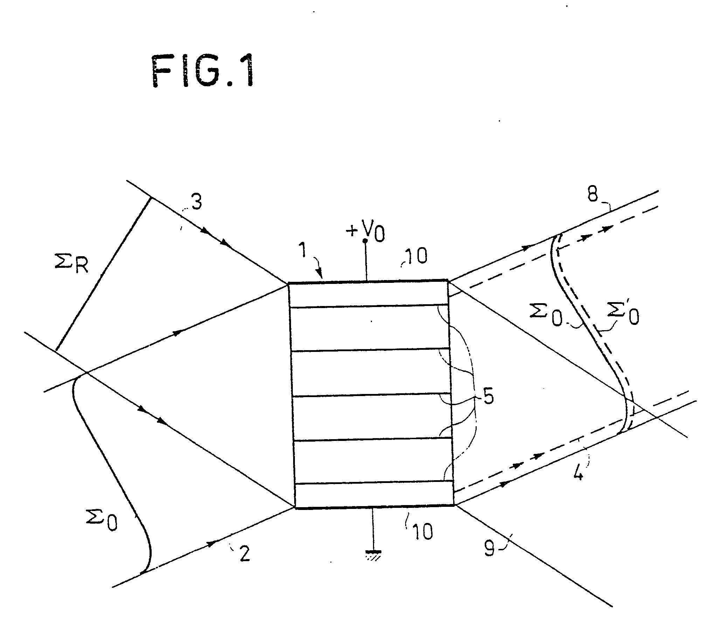

Sur la figure 1 est schématisée l'interaction d'un faisceau objet et d'un faisceau de référence dans un tel milieu d'interaction non linéaire. Dans ce milieu 1, interfèrent une onde objet 2 de front d'onde $\Sigma_o$ quelconque et une onde de référence 3 de front d'onde plan $\Sigma_R$. Ces deux ondes 2 et 3 sont cohérentes et interfèrent dans le volume du milieu 1. Le réseau d'interférence obtenu induit dans le milieu 1, avec une constante de temps $\tau$ caractéristique du matériau, un réseau de strates d'indice 5 qui diffracte une fraction de l'onde de référence 3 selon une onde diffractée 4 exactement superposée à l'onde objet transmise 8.

Cette onde diffractée 4 a un front d'onde $\Sigma'_o$ strictement superposé au front d'onde objet $\Sigma_o$, tel qu'il sort du milieu 1.

La fonction non diffractée de l'onde de référence traverse le milieu 1 et constitue l'onde de référence transmise 9, en gardant le même front d'onde plan $\Sigma_R$.

Le transfert d'énergie de l'onde de référence sur l'onde objet correspond à une diminution de l'intensité de l'onde de référence après traversée du milieu d'interaction. Après le temps d'inscription $\tau$ correspondant à l'enregistrement à saturation du réseau de strates à partir du réseau d'interférence, l'onde de référence transmise 9 en présence de l'onde objet a subi, par rapport à l'onde de référence transmise en absence de l'onde objet, une diminution d'énergie correspondant au gain sur l'onde objet transmise composée des ondes 8 et 4 avec interaction par rapport à l'onde objet transmise 8 en absence d'interaction.

Selon les matériaux utilisés, le temps d'inscription $\tau$ varie de quelques picosecondes à quelques dizaines de millisecondes.

Sur cette figure 1 un champ extérieur a été appliqué en branchant un générateur de tension $V_o$ aux bornes de deux électrodes 10 déposées à la surface du milieu 1.

Le cristal B.S.O. utilisé dans la configuration électro-optique transverse constitue donc un support à haute résolution spatiale pour l'inscription de réseaux et images halographiques. L'une des particularités intéressantes de ce matériau est que sa réponse en fréquence spatiale (fonction de transfert) peut être ajustée avec l'amplitude du champ extérieur $E_o$. Cette propriété spécifique peut être intéressante pour des applications au traitement d'images en temps réel.

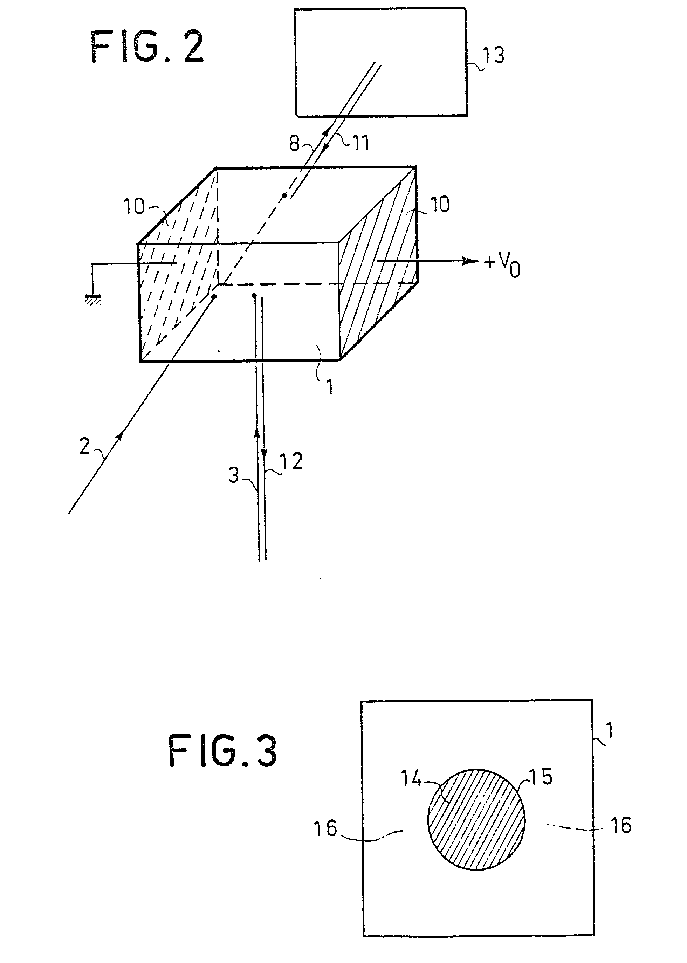

Certaines applications telle que l'interférométrie en temps réel nécessitent une nouvelle configuration optique assurant l'observation permanente de l'onde diffractée. La configuration utilisée dite de « mixage quatre ondes » est schématisée sur la figure 2. La partie non absorbée 8 de l'onde plane de référence 2 est rétroréfléchie par le miroir 13. L'onde plane 11 constitue l'onde de lecture du réseau d'indice et diffracte une onde 12 qui est l'onde complexe conjuguée de l'onde incidente 3, un séparateur de faisceau peut alors assurer la séparation spatiale de cette onde conjuguée 12 diffractée par le cristal et de l'onde incidente 3.

Sur cette figure 2 une tension $V_o$ est appliquée aux bornes de deux électrodes 10 déposées à la surface du milieu 1.

Ainsi un des paramètres qui déterminent le rendement de ces hologrammes est le champ électrique appliqué au cristal. Par ailleurs, il est nécessaire que le cristal soit uniformément éclairé par le faisceau de référence pour que le champ appliqué ait une bonne efficacité. Ceci présente l'inconvénient de déformer le faisceau de référence lors de la traversée du cristal, par diffraction sur les bords de celui-ci et ainsi de diminuer la qualité géométrique du faisceau de relecture obtenu par réflection du faisceau de référence dans le cas de l'interférométrie « quatre ondes ».

Par ailleurs, la puissance par unité de surface reçue par le cristal s'en trouve diminuée, ce qui augmente la constante de temps caractéristique du cristal. On propose dans l'invention d'éclairer uniformément le cristal par une lumière incohérente avec la lumière des faisceaux laser objet et référence, ce peut être par exemple une lumière blanche, afin de conserver à la fois un faisceau relativement localisé, donc une densité de puissance élevée et une bonne géométrie des faisceaux, et un champ électrique efficace.

Le B.S.O. est un matériau électro-optique et photoconducteur. Ainsi le réseau de franges créé par l'interférence du faisceau objet et du faisceau de référence génère des porteurs par photoconduction dont la densité est proportionnelle à l'éclairement et donc reproduit la modulation d'éclairement due à l'interférence des faisceaux. Ces porteurs, entraînés par le champ électrique appliqué, forment un réseau de charges qui développent un champ interne variable. C'est ce champ qui est responsable de la formation d'un hologramme d'indices par modulation électro-optique. On peut montrer que le champ interne est d'autant plus important que le champ appliqué au cristal est grand, et le résultat global est que le rendement de l'hologramme formé est proportionnel au carré du champ appliqué.

Dans la suite de la description on parlera de l'éclairement par un « faisceau laser » pour simplifier cette description. En fait il s'agit de l'éclairement du cristal par les faisceaux objet et référence qui interfèrent dans le cristal. Mais en général ces deux faisceaux ont une inclinaison par rapport au cristal qui est très peu différente. Dans les cas où ces deux faisceaux ont des directions qui ne peuvent être confondues, ce « faisceau laser » représente le faisceau référence ou faisceau de pompe qui est le plus puissant.

On considérera dans la suite à titre d'exemple comme milieu interactif une lame d'oxyde de bismuth-silicium.

Sur la figure 3 est représenté l'éclairement du milieu 1 par le faisceau laser. La zone 14 est une zone de forte conductivité. Les zones 16 sont des zones de faible conductivité. Ainsi dans la zone 14 tout se passe comme s'il n'y avait qu'un faible champ agissant et dans les zones 16 un fort champ agissant. La zone 15 est une zone où il existe un important gradient de champ.

Si le cristal n'est éclairé que partiellement, il se crée donc des zones illuminées et des zones sombres, et donc une conductivité locale variable.

La conductivité dans les zones sombres étant bien plus faible que dans les zones claires (si on considère le faisceau comme gaussien) il se produit une division de la tension appliquée au cristal, conduisant ainsi à un champ très faible au sein de la zone éclairée. Donc si le faisceau de référence n'éclaire pas uniformément le cristal, l'application du champ électrique ne modifie que très peu l'efficacité de l'hologramme.

Un autre effet vient s'ajouter à celui-ci : l'éclairement du cristal, en fonction de la position suivant un axe du cristal est un signal gaussien (si l'on néglige les variations rapides dues aux franges d'interférence). La conductivité suit donc la même variation que le champ électrique. La variation d'indice dans le cristal peut donc être assimilée à une lentille ; cette lentille produit alors une distorsion sur le faisceau conjugué, distorsion qui est bien visible lorsqu'on compare le faisceau conjugué au faisceau incident.

Si l'on éclaire le cristal uniformément avec une lumière blanche incohérente, la photoconductivité est proportionnelle à la somme des intensités de la lumière blanche et du faisceau laser. Bien que le contraste des franges d'interférence s'en trouve alors diminué du fait que l'on ajoute une composante continue, les variations spatiales d'intensité, donc de densité de porteurs peuvent être rendues très faibles. Ainsi on s'affranchit en grande partie de l'effet de lentille, et on a pu observer une amélioration de la géométrie du faisceau conjugué, par rapport à un éclairement non uniforme du cristal par le faisceau laser, mais sans éclairage incohérent supplémentaire. Cela permet de ne pas avoir à illuminer tout le cristal par le faisceau laser d'où une meilleure qualité du conjugué car il n'y a alors pas d'effets de bords, dus à la diffraction du faisceau sur les bords du cristal, et une plus grande densité de puissance. Cette plus grande densité de puissance conduit à des constantes de temps plus faibles pour la formation et l'effacement des hologrammes créés dans le cristal.

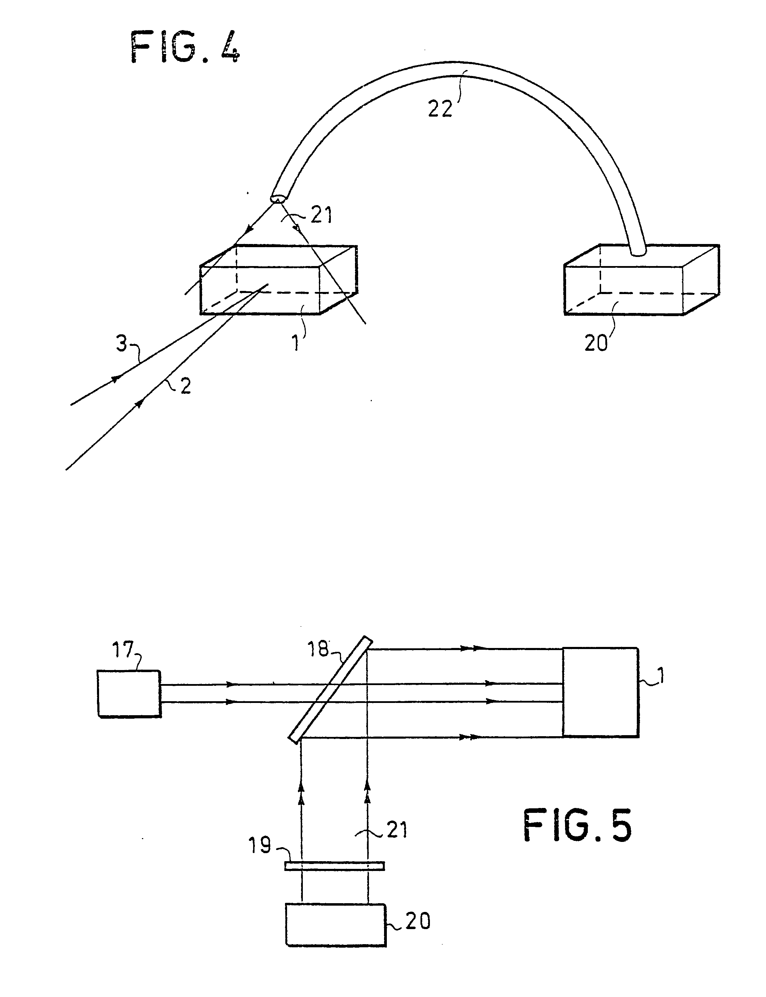

Sur la figure 4 est représentée une configuration possible d'éclairage incohérent. La source 20 est une source lumineuse qui peut être soit une source de lumière blanche, soit une source de lumière cohérente, mais celle-ci est incohérente avec le faisceau laser.

Sur cette figure est représenté un faisceau 20 de fibres.

Sur cette figure 4 on voit que l'on peut éclairer le milieu sur une autre face que celle sur laquelle le faisceau laser est incident. On peut donc déposer sur cette face une couche réfléchissante ou un masque qui ne laisse pas passer la lumière incohérente à l'endroit où passe le faisceau laser pour éviter ainsi une diminution du contraste des franges inscrites dans le milieu.

Sur la figure 5, pour obtenir le même effet, on dispose un masque 19 qui représente en négatif l'éclairement par le faisceau laser 17 de la face du milieu sur laquelle il est incident. Ce masque 19 permet de compenser l'éclairement gaussien du faisceau laser 17.

En éclairant le cristal par une lumière incohérente, et en n'illuminant qu'une partie du cristal par le faisceau laser, on a à la fois les avantages d'un faisceau concentré et d'un faisceau large : une densité de puissance élevée et une bonne géométrie des faisceaux d'une part, et une application efficace du champ électrique sans créer un effet de lentille.

Enfin, il faut noter que la puissance de la lumière blanche rapportée à la puissance du faisceau laser peut être ajustée de manière à obtenir au mieux l'effet désiré.

## Revendications

1. Dispositif d'éclairement d'un milieu électro-optique (1) pour enregistrer des hologrammes en temps réel comportant une source de lumière cohérente, formant à partir de la lumière cohérente issue de cette source une onde objet (2) destinée à éclairer un objet et une onde de référence (3), et un milieu interactif (1), ce milieu (1) recevant l'onde objet (2) émergeant de l'objet et l'onde référence (3), ces deux ondes interférant dans ce milieu d'interaction (1) dans lequel la modulation spatiale d'intensité lumineuse résultant des franges d'interférence (5) induit une modulation spatiale de l'indice de réfraction, le réseau de strates ainsi photoinduites diffractant une fraction de l'onde référence sous la forme d'un front d'onde (4) isomorphe de celui qui émane de l'objet, ce milieu étant soumis à un champ électrique transversal perpendiculaire à la direction des franges, caractérisé en ce qu'il comprend en outre une seconde source lumineuse (20) qui, pour atténuer la distorsion d'indice induite dans le milieu d'interaction (1) du fait que l'éclairage de ce milieu d'interaction (1) par l'onde de référence (3) n'est pas uniforme, produit un faisceau lumineux (21) non cohérent avec la lumière issue de la source de lumière cohérente, qui éclaire uniformément le milieu d'interaction (1).

2. Dispositif selon la revendication 1, caractérisé en ce que ce milieu interactif se présente sous la forme d'une lame.

3. Dispositif selon la revendication 2, caractérisé en ce que le milieu interactif est une lame de bismuth-silicium.

4. Dispositif selon la revendication 1, caractérisé en ce que cette seconde source (20) est une source laser.

5. Dispositif selon la revendication 1, caractérisé en ce que cette seconde source (20) produit un faisceau de lumière blanche.

6. Dispositif selon la revendication 1, caractérisé en ce que cette seconde source (20) produit. un faisceau lumineux (21) qui est véhiculé par un faisceau de fibres optiques (22).

7. Dispositif selon la revendication 2, caractérisé en ce que cette seconde source (20) produit un faisceau lumineux incident sur une des faces de cette lame autre que celle sur laquelle arrivent les ondes objet et référence qui interfèrent dans le milieu (1).

8. Dispositif selon la revendication 7, caractérisé en ce que l'on dépose un masque opaque au rayonnement produit par cette deuxième source (20) sur une partie de la face de la lame pour éviter une diminution du contraste des franges inscrites dans le milieu (1).

9. Dispositif selon la revendication 1, caractérisé en ce qu'un masque représentant en négatif l'éclairement de la face du milieu par les ondes objet et référence est disposé entre cette deuxième source (20) et le milieu interactif (1).

## Claims

1. A device for illuminating an electro-optical medium (1) for recording holograms in real time, comprising a source of coherent light, producing, from the coherent light issuing from this source, an object wave (2) intended to illuminate an object, and a reference wave (3), and an interaction medium (1), this medium (1) receiving the object wave (2) emerging from the object, and the reference wave (3), these two waves interfering in this interaction medium (1) in which the spatial modulation of light intensity resulting from the interference fringes (5) induces a spatial modulation of the refraction index, the network of strata thus photo-induced diffracting a fraction of the reference wave in the form of a wave front (4) isomorphous with that issuing from the object, this medium being subjected to a transverse electric field perpendicular to the direction of the fringes, characterized in that it comprises in addition a second light source (20) which produces a light beam (21) which is not coherent with the light coming from the coherent light source, which illuminates the interaction medium uniformly, in order to reduce the index distortion induced in the interaction medium (1) due to the fact that the illumination of said interaction medium (1) by the reference wave (3) is not uniform.

2. A device as claimed in claim 1, characterized in that this interaction medium is in laminar form.

3. A device as claimed in claim 2, characterized in that the interaction medium is a bismuth-silicon lamina.

4. A device as claimed in claim 1, characterized in that this second source (20) is a laser source.

5. A device as claimed in claim 1, characterized in that this second source (20) produces a beam of white light.

6. A device as claimed in claim 1, characterized in that this second source (20) produces a light beam (21) which is routed by means of a bundle of optical fibers (22).

7. A device as claimed in claim 2, characterized in that this second source (20) produces a light beam incident on one of the faces of this lamina other than that on which the object and reference waves arrive which interfere in the medium (1).

8. A device as claimed in claim 7, characterized in that a mask which is opaque to the rays produced by this second source (20) is deposited on part of the face of the lamina in order to avoid a reduction in contrast of the fringes inscribed in the medium (1).

9. A device as claimed in claim 1, characterized in that a mask representing, in negative form, the illumination of the face of the medium by the object and reference waves is disposed between this second source (20) and the interaction medium (1).

## Patentansprüche

1. Beleuchtungsvorrichtung für ein elektrooptisches Medium (1) zur Aufzeichnung von Hologrammen in Echtzeit, mit einer kohärenten Lichtquelle, wobei ausgehend von dem kohärenten Licht dieser Quelle eine der Beleuchtung eines Objekts dienende Objektwelle (2) und eine Bezugswelle (3) erzeugt wird, und mit einem interaktiven Medium (1), dem die vom Objekt kommende Objektwelle (2) und die Bezugswelle (3) zugeführt werden, wobei diese beiden Wellen in diesem Interaktionsmedium (1) interferieren und die von den Interferenzrändern (5) resultierende räumliche Lichtintensitätsmodulation eine räumliche Modulation des Brechungsindex induziert, durch die das Netz der so photoinduzierten Strati einen Teil der Bezugswelle in Form einer Wellenfront (4) diffraktiert, die die gleiche Form wie die vom Objekt kommende Wellenfront besitzt, wobei das Medium einem elektrischen Querfeld ausgesetzt ist, das senkrecht zur Richtung der Ränder verläuft, dadurch gekennzeichnet, daß sie außerdem eine zweite Lichtquelle (20) aufweist, die ein mit dem von der kohärenten Lichtquelle ausgehenden Licht nicht kohärentes Lichtstrahlenbündel (21) erzeugt, das das Interaktionsmedium (1) gleichmäßig beleuchtet, um die Indexverwerfung abzuschwächen, die in das Interaktionsmedium (1) aufgrund der Tatsache induziert ist, daß die Beleuchtung des Interaktionsmediums (1) durch die Bezugswelle (3) nicht uniform ist.

2. Vorrichtung nach Anspruch 1, dadurch gekennzeichnet, daß das interaktive Medium sich in Form eines Plättchens präsentiert.

3. Vorrichtung nach Anspruch 2, dadurch gekennzeichnet, daß das interaktive Medium ein Wismut-Silicium-Plättchen ist.

4. Vorrichtung nach Anspruch 1, dadurch gekennzeichnet, daß die zweite Quelle (20) eine Laserlichtquelle ist.

5. Vorrichtung nach Anspruch 1, dadurch gekennzeichnet, daß die zweite Quelle (20) einen Strahl weißen Lichts erzeugt.

6. Vorrichtung nach Anspruch 1, dadurch gekennzeichnet, daß die zweite Quelle (20) einen Lichtstrahl (21) erzeugt, der über ein Bündel von Lichtleitfasern (22) geführt wird.

7. Vorrichtung nach Anspruch 2, dadurch gekennzeichnet, daß die zweite Quelle (20) einen Lichtstrahl erzeugt, der auf eine der Oberseiten des Plättchens auftrifft, die nicht die Seite ist, auf der die Objekt- und Bezugswellen, die in dem Medium (1) interferieren, ankommen.

8. Vorrichtung nach Anspruch 7, dadurch gekennzeichnet, daß man auf einem Teil der Oberseite des Plättchens eine Maske anbringt, die für das von der zweiten Quelle (20) erzeugte Licht undurchlässig ist, um eine Verringerung des Kontrastes der Linien zu verhindern, die in dem Medium (1) eingeschrieben sind.

9. Vorrichtung nach Anspruch 1, dadurch gekennzeichnet, daß eine Maske, die in negativer Form die Beleuchtung der Oberseite des Mediums durch die Objektwelle und die Bezugswelle darstellt, zwischen der zweiten Quelle (20) und dem interaktiven Medium angeordnet ist.

# FIG.1

FIG. 2

FIG.3

FIG. 4

22

21

3

2

1

20

17

18

1

19

21

FIG. 5

20